# EUROPÄISCHE PATENTSCHRIFT

(11) **EP 3 329 475 B1**
(45) Veröffentlichungstag und Bekanntmachung des Hinweises auf die Patenterteilung: **22.05.2019**
(21) Anmeldenummer: 16750663.3
(22) Anmeldetag: 26.07.2016
(51) Int. Cl.: G08B 7/06, B66B 3/00, G01C 21/20, G06Q 90/00, G01S 1/68, H04W 4/02

(54) **EVAKUIERUNG VON GEBÄUDEN MIT AUFZUGSYSTEMEN**
EVACUATION OF BUILDINGS WITH ELEVATOR SYSTEMS
EVACUATION DE BATIMENTS A L'AIDE DE SYSTEMES D'ASCENSEUR

(30) Priorität: 31.07.2015 EP 15179310
(43) Veröffentlichungstag der Anmeldung: 06.06.2018
(73) Patentinhaber: Inventio AG, 6052 Hergiswil (CH)
(72) Erfinder: FINSCHI, Lukas, 6030 Ebikon (CH); TROESCH, Florian, 8045 Zürich (CH)
(86) Internationale Anmeldenummer: PCT/EP2016/067807
(87) Internationale Veröffentlichungsnummer: WO 2017/021223

(56) Entgegenhaltungen:
- DE-A1- 10 304 073
- US-A1- 2007 001 904
- US-A1- 2010 109 864
- US-A1- 2013 310 081
- US-A1- 2015 170 503

## Beschreibung

Die hier beschriebene Technologie betrifft allgemein die Evakuierung eines Gebiets, insbesondere eines mehrstöckigen Gebäudes, in dem ein Aufzugsystem vorhanden ist. Ausführungsbeispiele der Technologie betreffen ein Verfahren und ein System zum Evakuieren eines Gebiets.

Im Stand der Technik sind allgemein Verfahren zum Evakuieren von Gebäuden bekannt, beispielsweise aus US 2015/170503 A1 und DE 103 04 073 A1. US 2015/170503 A1 offenbart ein System aus Sensorknoten, die mit einem Server und einem Nutzergerät kommunizieren, wobei das Nutzergerät Information zum Evakuierungszustand empfangen kann. DE 103 04 073 A1 beschreibt ein Informationssystem zur dynamischen Wegeleitung, wobei ein Anzeigemittel zustandsbezogene Leitinformation darstellt. Ausserdem sind im Stand der Technik Systeme bekannt, um in einem Gebäude den Standort eines mobilen Geräts zu bestimmen, beispielsweise aus US 2010/109864 A1, US 2013/310081 A1 und US 2007/001904 A1.

Ein Verfahren zum Evakuieren eines Gebäudes ist beispielsweise aus DE102013201873A1 bekannt. Gemäss diesem Verfahren wird der Ort eines mobilen Geräts und damit der Standort einer Person, die das mobile Gerät mit sich führt, innerhalb eines Gebäudes mit Hilfe eines Indoor-Positionsbestimmungssystems (WLAN Knoten, Hotspots, Accesspoints) bestimmt. Das mobile Gerät liest von im Gebäude angebrachten Kennzeichnungen (QR Code oder Barcode) den Gebäudeplan. Abhängig von der bestimmten Position werden verfügbare Fluchtwege bestimmt. Aus dem bestimmten Standort und den verfügbaren Fluchtwegen wird für die Person eine Fluchtroute, z. B. der schnellste Weg vom aktuellen Standort zum nächsten passierbaren Notausgang, bestimmt. Die berechnete Fluchtroute wird auf dem mobilen Gerät graphisch dargestellt. Für Rollstuhlfahrer sieht das Verfahren vor, dass diese durch Evakuierungsinformationen an einen sicheren Ort im Gebäude geleitet werden, um dort auf eine Rettungsmannschaft zu warten.

Obwohl DE102013201873A1 eine Lösung offenbart, bei der einer Person eine Fluchtroute auf dem mobilen Gerät graphisch mitgeteilt wird, berücksichtigt diese Lösung sich ändernde Verhältnisse während einer Evakuierungssituation nicht. Es besteht Bedarf an einer verbesserten Technologie zur Evakuierung eines Gebiets, mit der Personen sicher und effizient aus dem Gebiets evakuiert werden können, auch wenn sich die Verhältnisse während einer Evakuierung beispielsweise wegen Panik oder einem sich schnell ausbreitenden Brand ändern.

Die Erfindung ist in den unabhängigen Ansprüchen definiert.

In den hier beschriebenen Ausführungsbeispielen wird der zu evakuierenden Person nicht nur der Fluchtweg mitgeteilt, sondern es wird auch überwacht, ob die Person auch tatsächlich am Zielort ankommt und dort als "evakuiert" registriert wird. Dadurch wird sichergestellt, dass die Person die Gefahrenumgebung verlassen hat und auch tatsächlich am Zielort angekommen ist - und nicht nur den Fluchtweg Informationen mitgeteilt bekommen hat. Für eine Rettungsmannschaft ist es beispielsweise wichtig zu wissen, ob sie nach dieser Person im Gebiet suchen muss, wenn sie nach einer festgelegten Zeit immer noch nicht als "evakuiert" gilt.

Für den Fall, dass die Rettungsmannschaft nach dieser Person suchen muss, unterstützt die hier beschriebene Technologie das Auffinden der Person. Da die Fluchtweginformation an das mobile Gerät übermittelt wurde, ist der letzte bekannte Aufenthaltsort der Person im Gebiet sehr wahrscheinlich die zuletzt bestimmte Position des mobilen Geräts.

Für Rettungskräfte ist es ausserdem wichtig zu wissen, wie viele Personen sich im Gebiet befinden. Im Idealfall, d.h., jedes mobile Gerät ist eingeschaltet und die Bluetooth Funktion ist jeweils aktiviert, erlaubt die Technologie die momentane Position eines jeden mobilen Geräts im Gebiet zu bestimmen und damit die Anzahl der mobilen Geräte im Gebiet zu ermitteln. Werden die als "evakuiert" geltenden Personen gezählt, kann abgeschätzt werden, wie viele Personen sich noch im Gebiet befinden. Für Personen, welche mehrere mobile Geräte besitzen, kann eine diesbezügliche Information bereits vorgängig erfasst und bei der Evakuierung verwendet werden, zum Beispiel für eine verbesserte Positionsbestimmung. In einer solchen Situation wird die Position jenes oder jener Geräte verwendet, welche sich tatsächlich bewegen. Damit können z. B. zurückgelassene Geräte als solche erkannt werden.

In einem Ausführungsbeispiel wird eine Ortsveränderung des mobilen Geräts durch Bestimmen neuer Positionen des mobilen Geräts verfolgt. Dies geschieht entlang des ihr mitgeteilten Fluchtwegs, und zwar so lange, bis sie am Zielort registriert wird. In einem Ausführungsbeispiel der Technologie kann eine Abweichung vom Fluchtweg erkannt werden, beispielsweise wenn sich die Person im Gebiet verlaufen hat oder sich die Situation im Gebiet derart verändert hat, dass der ursprünglich geplante Fluchtweg nicht mehr zur Verfügung steht, weil er z. B. inzwischen blockiert ist. Wenn eine Abweichung vom Fluchtweg erkannt wird, kann der Fluchtweg aktualisiert und/oder die Person baldmöglichst darauf hingewiesen werden. Dadurch kann vermieden werden, dass wertvolle Zeit verloren geht. Dies und eine eventuell erforderliche Aktualisierung des Fluchtwegs können dazu beitragen, dass der Person ein höheres Sicherheitsgefühl vermittelt wird und das Risiko von Panik reduziert wird.

Die Technologie erlaubt ausserdem die Ermittlung eines personenspezifischen Fluchtwegs, d. h. eine eventuell bestehende körperliche Einschränkung der zu evakuierenden Person kann bei der Ermittlung des Fluchtwegs berücksichtigt werden. Dazu kann das Verfahren auf ein gespeichertes Nutzerprofil der Person zugreifen, in dem eine eventuell bestehende körperliche Einschränkung gespeichert ist. Besteht beispielsweise eine eingeschränkte Gehfähigkeit, so dass die Person einen Rollstuhl benutzen muss, darf der Fluchtweg keine Treppen umfassen; stattdessen wird in einem solchen Fall die Nutzung des Aufzugsystems in den Fluchtweg eingeplant. Die Planung kann derart sein, dass eine Aufzugskabine auf das Stockwerk verfahren wird, auf dem der Fluchtweg verläuft, so dass sie z. B. bereits einsteigebereit ist, wenn die Person dort ankommt. Besteht dagegen eine eingeschränkte Sehfähigkeit, wird die Fluchtweginformation an das mobile Gerät mit einem Steuerbefehl übermittelt, so dass die Fluchtweginformation der Person hörbar mitgeteilt wird.

Die Technologie nutzt in einem Ausführungsbeispiel eine aktuelle Gebäudesituation, um einen sicheren Fluchtweg zu ermitteln. Dafür ist in diesem Ausführungsbeispiel im Gebäude ein System von Sensoren vorhanden, mit dem Situationsparameter bestimmbar sind. Während einem Notfall kann sich die Situation fortlaufend ändern, weil sich z. B. ein Brand ausgebreitet hat und bisher verfügbare Fluchtwege nicht mehr verfügbar sind. Der oder die bestimmten Situationsparameter geben in einem Ausführungsbeispiel Aufschluss über die Gebäudesituation (beispielsweise ob die Zugänge zu den Aufzügen frei sind und ob die Aufzüge selbst nutzbar sind) und können in die Ermittlung des Fluchtwegs mit einfliessen.

In einem Ausführungsbeispiel kann an jedes mobile Gerät, dessen momentane Position bestimmt ist, Evakuierungsinformation gesandt werden. Die Evakuierungsinformation ist individuell für ein mobiles Gerät und umfasst Anweisungen für eine Person, der dieses mobile Gerät zugeordnet ist. Die Evakuierungsinformation kann beispielsweise darüber informieren, dass ein Notfall vorliegt, dass eine Evakuierung des Gebäudes begonnen hat, dass auf dem Stockwerk, auf dem sich die Person befindet, keine Gefahr besteht, dass die Person noch nicht zum Aufzug gehen soll sondern erst in x Minuten und/oder dass die Person sich sofort zum mitgeteilten Aufzug begeben soll. Die Evakuierungsinformation kann die Person auch darüber informieren, dass ein nahgelegenes Treppenhaus begehbar ist und die Person, wenn sie zum Treppensteigen in der Lage, evtl. schneller zum Zielort gelangen lässt als mit einem Aufzug.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation auf einem Gebäudestockwerk, das von zwei Aufzugsystemen bedient wird;
- Fig. 2: eine schematische Darstellung eines beispielhaften Kommunikationssystems für eine Evakuierung eines Gebäudes;
- Fig. 3: eine schematische Darstellung eines mobilen Geräts, das Fluchtweginformation anzeigen kann;
- Fig. 4: eine schematische Darstellung eines Teils des Gebäudes mit einem Ausführungsbeispiels eines Aufzugsystems; und
- Fig. 5: eine beispielhafte Darstellung eines Verfahrens zum Evakuieren eines Gebäudes anhand eines schematischen Ablaufdiagramms.

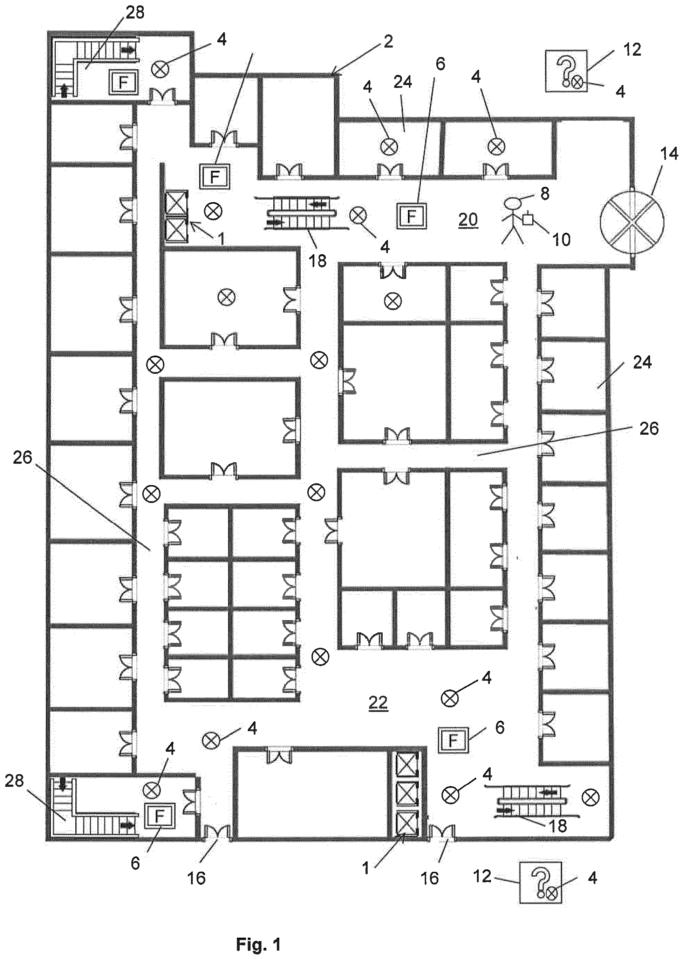

Fig. 1 ist eine schematische Darstellung einer beispielhaften Situation auf einem Stockwerk eines Gebäudes 2, das bei einem Notfall (z. B. Brand, Naturkatastrophe, Terrorsituation) sicher und effizient ganz oder teilweise zu evakuieren ist. Unter dem Begriff Evakuierung wird hier das Räumen eines Gebiets bezeichnet, wobei das Gebiet ein Gebäude, ein Teil eines Gebäudes, ein Gebäude mit angrenzendem Gelände oder eine andere Struktur (z. B. ein Schiff), die zum Aufenthalt von Personen geeignet ist, sein kann. Personen, die sich in einem zu evakuierenden Gebiet aufhalten, müssen das Gebiet verlassen oder zumindest einen dort vorgesehenen als sicher geltenden Zielort aufsuchen. Die hier beschriebene Technologie ist nicht auf die Evakuierung von Gebäuden (z. B. Wohnhäuser, Büro- und Geschäftshäuser, Hotels, Sportarenen, Flughafengebäude, Fabrikanlagen) beschränkt. Der Fachmann erkennt, dass die Technologie beispielsweise auch zur Evakuierung von anderen Strukturen (z. B. Schiffen) verwendet werden kann. In den folgenden Ausführungsbeispielen ist das Gebäude 2 das zu evakuierende Gebiet.

Das Gebäude 2 kann durch einen Haupteingang 14 und zwei Nebeneingänge 16 betreten und verlassen werden kann. Je nach Ausgestaltung können die Nebeneingänge 16 auch als Notausgänge und somit zur ausschliesslichen Nutzung während einem Notfall vorgesehen sein. Ausserhalb des Gebäudes 2 sind in der Nähe dieser Eingänge 14, 16 Sammelpunkte 12 vorhanden, an denen sich Personen bei einem Notfall nach dem Verlassen des Gebäudes 2 einzufinden haben, um dort als "evakuiert" registriert zu werden. Für die Personen stellen die Sammelpunkte 12 Zielorte am Ende von Fluchtwegen dar. Die Sammelpunkte 12 können in einer Umgebung des Gebäudes 2 permanent installiert sein. Die Sammelpunkte 12 können in der Umgebung bei Bedarf, z. B. während einer Evakuierungssituation, auch temporär eingerichtet werden, beispielsweise an einem Stand oder einem Fahrzeug befestigt.

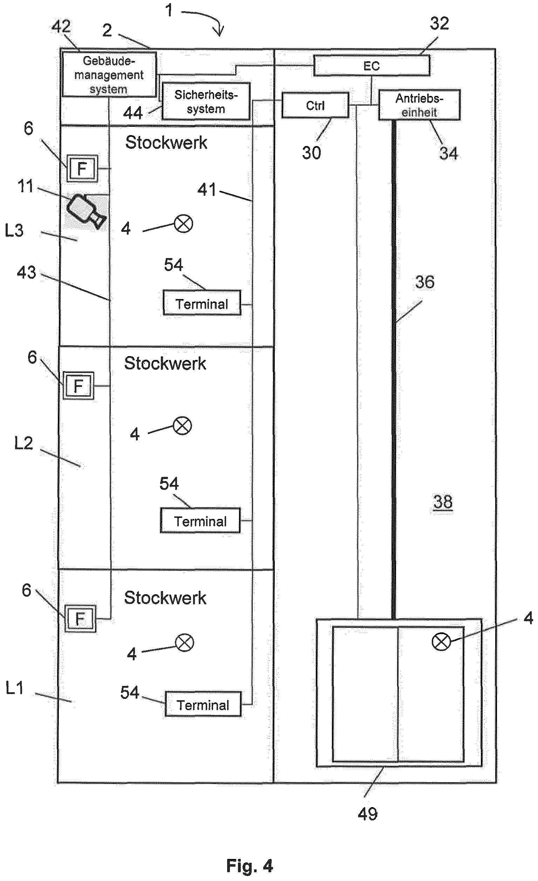

Alternativ zu der genannten Möglichkeit, evakuierte Personen an den Sammelpunkten 12 als "evakuiert" zu registrieren, können entsprechende Einrichtungen (beispielsweise die unten beschriebene Beacons) an den Eingängen 14, 16 des Gebäudes 2 und/oder an speziellen Kontrollpunkten oder Drehkreuzen innerhalb des Gebäudes 2 vorgesehen sein, um die Anwesenheit von Personen an diesen Stellen zu erkennen und sie als "evakuiert" zu registrieren. Es ist ausserdem möglich, derartige Einrichtungen in Aufzugskabinen 49 (s. Fig. 4) und/oder deren Zugängen zu installieren, um beispielsweise Personen beim Verlassen einer Aufzugskabine zu erkennen. Dadurch kann beispielsweise festgestellt werden, dass eine Person z. B. auf einem "sicheren" Stockwerk angekommen ist.

Der Haupteingang 14 führt zu einem Eingangsbereich 20, und die Nebeneingänge 16 führen zu einem Eingangsbereich 22. Die Eingangsbereiche 20, 22 sind im Folgenden jeweils auch als Lobby 20, 22 bezeichnet. Von jeder Lobby 20, 22 aus hat eine Person 8 Zugang zu einem Aufzugsystem 1, einer Fahrtreppenanlage 18 und einem Treppenhaus 28, um ein anderes Stockwerk zu erreichen. Von den Lobbys 20, 22 aus hat die Person 8 auch Zugang zu Fluren und Gängen 26 und einzelnen Räumen 24.

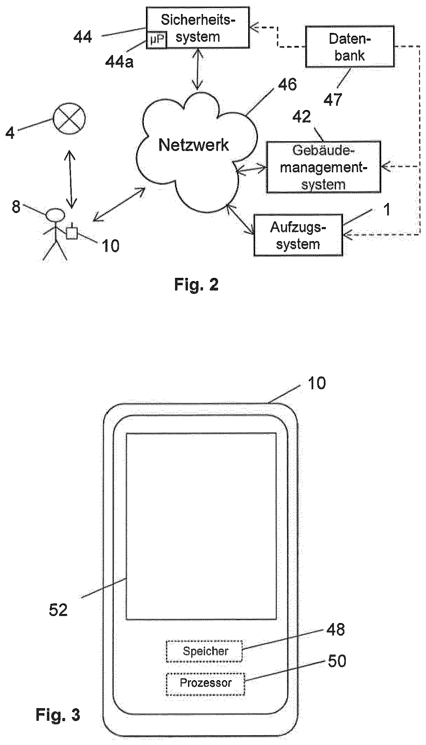

Fig. 1 zeigt innerhalb des Gebäudes 2 ausserdem Notfallmelder 6 einer Gefahrenmeldeanlage, die beispielsweise Einrichtungen zum Detektieren von Temperatur, Rauch und/oder Gas aufweisen und gegebenenfalls Alarm auslösen. Im Folgenden sind die Notfallmelder 6 Brandmelder (6) einer Brandmeldeanlage. Der besseren Übersicht wegen sind in Fig. 1 Brandmelder 6 nur in den Treppenhäusern 28 und den Lobbys 20, 22 gezeigt. Es versteht sich jedoch, dass eine Vielzahl dieser Brandmelder 6 gemäss evtl. bestehenden Brandschutzverordnungen in den Räumen 24, den Gängen und Fluren 26 und den Aufzugsystemen 1 (z. B. in einem in Fig. 4 gezeigten Aufzugschacht 38) angeordnet und mittels eines Netzwerks mit einer Brandmeldezentrale (nicht gezeigt) und/oder einem in Fig. 2 gezeigten Gebäudemanagementsystem 42 verbunden sind. Die Anordnung der Brandmelder 6 und deren Vernetzung können in einem Gebäudeplan oder Gebäudemodell dokumentiert sein. Die Kommunikation in diesem Netzwerk erfolgt in einem Ausführungsbeispiel gemäss einem Netzwerkprotokoll für die Gebäudeautomation, beispielsweise dem BACnet (Building Automation and Control Networks). Brandmeldeanlagen und deren Komponenten, z. B. Brandmelder 6, sind allgemein bekannt, so dass weitere Ausführungen hierzu an dieser Stelle nicht erforderlich sind.

Zusätzlich zu solchen Brandmeldeanlagen hat das Gebäude 2 unter Umständen Sensoren, die zur Detektion oder Beobachtung von verschiedenen Ereignissen vorgesehen sind und ebenfalls im Gebäudeplan oder Gebäudemodell dokumentiert sein können. Beispielsweise können Bewegungssensoren im Gebäude 2 verteilten angeordnet sein. Ausserdem können Videokameras 11 (s. Fig. 4) beispielsweise in den Fluren und Gängen 26, den Eingängen 14, 16 und in den Lobbys 20, 22 angeordnet sein. Sicherheitspersonal oder ein Bildverarbeitungssystem können beispielsweise die von den Videokameras 11 aufgezeichneten Bilder auswerten, um die aktuelle Situation in einzelnen Bereichen des Gebäudes 2 zu beurteilen, beispielsweise ob ein Flur oder Gang 26 blockiert oder begehbar ist, ob es an einer Stelle eine Ansammlung/Stauung von Personen gibt und/oder welches Ausmass ein dort gemeldeter Brand hat. Die Signale der Sensoren und die Auswertung der erfassten Ereignisse können in Verbindung mit Signalen der Brandmelder 6 aktuelle Situationsparameter liefern, die beispielsweise Aufschluss darüber geben, ob die Zugänge zu den Aufzügen frei sind und ob die Aufzüge selbst nutzbar sind. Von den Brandmeldern 6 und den Sensoren erzeugte Signale und deren Auswertung können in die Bestimmung eines Fluchtwegs mit einfliessen, wie unten beschrieben.

Fig. 1 zeigt ausserdem eine Vielzahl von Festpunktmarkierungen 4, die an verschiedenen Stellen innerhalb des Gebäudes 2 angeordnet sind. Die Festpunktmarkierungen 4 sind beispielsweise in Bereichen angeordnet, an denen sich die Person 8 aufhalten kann; dazu gehören beispielsweise die Räume 24, die Gänge und Flure 26, die Treppenhäuser 28 und die Lobbys 20, 22. Ebenfalls der besseren Übersicht wegen sind in Fig. 1 nur einige der Festpunktmarkierungen 4 gezeigt, und nur wenige davon sind mit Bezugszeichen versehen. Wie in Fig. 1 gezeigt, sind Festpunktmarkierungen 4 auch an den Sammelpunkten 12 vorhanden. Die Anordnung der Festpunktmarkierungen 4 kann ebenfalls in dem Gebäudeplan oder Gebäudemodell dokumentiert sein. Die Sammelpunkte 12 können alternativ dazu nur temporär bei Bedarf mit Festpunktmarkierungen 4 ausgestattet werden. Wie oben erwähnt, können die Sammelpunkte 12 an einem sicheren Ort, beispielsweise in der Umgebung des Gebäudes 2, bei Bedarf temporär und mobil eingerichtet werden. Dies kann von Vorteil sein, wenn ein Standort eines Sammelpunktes 12 und deren Anzahl, flexibel und beispielsweise abhängig von der Art und/oder Umfang des Notfalls und der Zahl der zu evakuierenden Personen eingerichtet werden muss.

Gemäß der Erfindung ist ein mobiles Gerät 10, das die Person 8 mit sich führt, dazu ausgestaltet, um Daten von einer Festpunktmarkierung 4 (beispielsweise dessen Identifikationsnummer) zu empfangen, mittels denen ein momentaner Standort des mobilen Geräts 10 bestimmt werden kann. Das Empfangen erfolgt kontaktlos, beispielsweise durch Scannen eines optischen Codes (z. B. QR Code, Barcode, Farbcodes) oder Herstellen einer Funkverbindung basierend auf einer der bekannten Technologien für Nahfeldkommunikation (NFC "near field communication"), Wi-Fi Direct, RFID oder Bluetooth.

Im Folgenden ist das mobile Gerät 10 ein Bluetooth fähiges Smartphone, und die Festpunktmarkierungen 4 sind entsprechend dazu ebenfalls Bluetooth fähig. Eine Festpunktmarkierung 4 ist daher im Folgenden als "Beacon 4" oder als "Bluetooth Beacon 4" bezeichnet. Die Kommunikation zwischen dem Smartphone (10) und den Beacons 4 erfolgt somit gemäss dem Bluetooth Standard, z. B. dem Bluetooth Standard 4.0 (Bluetooth Low Energy (BLE)) oder einem anderen Bluetooth Standard.

Unabhängig vom gewählten Standard sendet ein Beacon 4 immer die gleichen Daten aus, beispielsweise seine Identifikationsnummer (z. B. "ID = 5"). Ist das mobile Gerät 10 (bei aktivierter Bluetooth Funktion) in Funkreichweite des Beacons 4, kommt es automatisch zu einer kommunikativen Verbindung und das mobile Gerät 10 empfängt die ausgesendeten Daten; es erkennt dadurch, dass es beispielsweise in der Nähe des Beacons 4 mit der "ID = 5" ist. Dem entsprechend wird die Verbindung unterbrochen, wenn das mobile Gerät 10 sich wieder ausserhalb der Funkreichweite befindet. Der Fachmann erkennt, dass ein aus der Bluetooth Technologie bekanntes Pairing beispielsweise wegen der Vielzahl von im Gebäude 2 verteilten Beacons 4 und sich eventuell im Gebäude 2 aufhaltenden (einmaliger) Besucher in einem Ausführungsbeispiel nicht vorgesehen ist. Sollte es jedoch vorgesehen sein, ist hier angenommen, dass ein erster kommunikativer Kontakt (d. h. das Pairing) zwischen dem mobilen Gerät 10 und den Beacons 4 bereits erfolgt ist. Beim Pairing tauschen die Kommunikationspartner Kenndaten aus, so dass sie sich beim nächsten Mal automatisch wiedererkennen.

Fig. 2 illustriert die Interaktionen des mobilen Geräts 10 mit dem Beacon 4 und mit an ein Kommunikationsnetzwerk 46 gekoppelten Systemen (1, 42, 44). In einem Ausführungsbeispiel speichert jeder Beacon 4 eine individuelle Kennung (z. B. "ID=5"), die bei einer kommunikativen Verbindung an das mobile Gerät 10 übermittelt wird. Das mobile Gerät 10 (bzw. eine installierte Softwareanwendung) nutzt die empfangene Kennung eines Beacons 4, um mittels einer Funkverbindung auf eine Datenbank 47 zuzugreifen, in der die Kennung mit Daten zu einem Ort, an dem dieser Beacon 4 angeordnet ist, verknüpft ist (z. B. "ID = 5" in der Lobby 20 am Zugang zur Fahrtreppenanlage 18). Die Kennung des Beacons 4 und die Daten zu seinem Standort bilden in der Datenbank 47 einen Datensatz. Die Anzahl solcher Datensätze entspricht der Anzahl der Beacons 4. Die Datenbank 47 kann in einem Speichersystem eines Gebäudemanagementsystems 42 (Building Controller) oder einem Speichersystem eines separaten Sicherheitssystems 44 (Security System) oder des Aufzugsystems 1 vorhanden sein. Dies ist in Fig. 2 durch gestrichelte Linien zwischen der Datenbank 47 und den Systemen 1, 42, 44 angedeutet. Der Zugriff auf die Datenbank 47 kann über das Kommunikationsnetzwerk 46 (z. B. WLAN, Internet) erfolgen, während dem auch ein Identifikationsparameter (z. B. Telefonnummer und/oder Geräte ID Code (Media-Access-Control (MAC) Adresse)) des auf die Datenbank 47 zugreifenden mobilen Geräts 10 übertragen wird.

Aus Sicht des Gebäudemanagementsystems 42 oder des Sicherheitssystems 44 ist mit dem Zugriff auf die Datenbank 47 einerseits bekannt, welches mobile Gerät 10 sich in der Nähe des Beacons 4 mit "ID=5" aufhält. Andererseits erhält das mobile Gerät 10 Daten bezüglich des Standorts dieses Beacons 4 und somit seines eigenen Standorts. Bewegt sich die Person 8 innerhalb des Gebäudes 2, einschliesslich einer Nutzung des Aufzugsystems 1 oder der Fahrtreppenanlage 18, wiederholt sich der beschriebene Vorgang, sobald zwischen dem mobilen Gerät 10 und einem anderen Beacon 4 eine kommunikative Verbindung besteht. Aus Sicht des Gebäudemanagementsystems 42 oder des Sicherheitssystems 44 lässt sich dadurch die Bewegung des mobilen Geräts 10 verfolgen. Aus Sicht der das mobile Gerät 10 nutzenden Person 8 wird im Evakuierungsfall dadurch eine Orientierung ermöglicht oder zumindest eine Orientierungshilfe bereitgestellt, beispielsweise weil das mobile Gerät 10 der Person 8 von ihr wahrnehmbare Standortinformation mitteilt.

Der Fachmann erkennt, dass die in Verbindung mit Fig. 2 beschriebenen Interaktionen eine Art Sensorfunktion darstellen. Das Sicherheitssystem 44 kann beispielsweise aus der Anzahl der Zugriffe auf die Datenbank 47 schliessen, wie viel Personenverkehr momentan im Gebäude 2 herrscht, wo viel und wenig Personenverkehr herrscht, in welche Richtungen sich der Verkehr bewegt (sowohl in horizontaler als auch in vertikaler Richtung) und wo eventuell der Verkehr stockt (z. B. mehrere mobile Geräte 10 greifen mit der Kennung desselben Beacons 4 auf die Datenbank 47 zu (eventuell wiederholt), bewegen sich aber auf keinen anderen Beacon 4 zu). Auch diese Information kann als aktueller Situationsparameter für die Berechnung des Fluchtweges herangezogen werden.

In einem Ausführungsbeispiel ist auf dem mobilen Gerät 10 eine Softwareanwendung (App) installiert, die die Kommunikation mit den Beacons 4 und den an das Kommunikationsnetzwerk 46 gekoppelten Einheiten (1, 42, 44) unterstützt. Autorisierte Personen (z. B. regelmässige Nutzer des Gebäudes 2) können die App auf ihrem mobilen Gerät 10 vorinstallieren. Einem Besucher kann auf seinem mobilen Gerät 10 beim Betreten des Gebäudes 2 die App zum Download angeboten werden.

Die App steuert auch ein User Interface (z. B. ein berührungsempfindliches Display umfassend), mit dem der Person 8 beispielsweise Standort- und/oder Fluchtweginformation mitgeteilt werden kann. Die Standort- und/oder Fluchtweginformation kann in lesbarer Form auf dem Display dargestellt werden, beispielsweise in Form eines Textes und/oder eines oder mehrerer Symbole. Die Information kann ausserdem allein oder in Verbindung mit einer Darstellung des Gebäudeplans oder -modells dargestellt werden. Zusätzlich oder alternativ dazu kann die Standort- und/oder Fluchtweginformation der Person 8 auch akustisch mitgeteilt werden, so dass beispielsweise auch Personen mit eingeschränkter Sehfähigkeit die Ortsinformationen erhalten und entsprechend reagieren können.

Fig. 3 illustriert ein Smartphone als ein Beispiel für ein mobiles Gerät 10. Darin sind eine Speichereinrichtung 48 (Memory) und ein Prozessor 50 unter einem Display 52 (Touch Screen) von aussen nicht sichtbar (deswegen gestrichelt angedeutet) angeordnet. Mit Hilfe des User Interfaces kann die Person 8 Einstellungen und gewünschte Funktionen am mobilen Gerät 10 individuell anpassen. Die Bluetooth Funktion kann beispielsweise aktiviert und deaktiviert werden; letzteres beispielsweise zur Wahrung der Privatsphäre, weil ohne Bluetooth Funktion die Bewegungen und Aufenthaltsorte der Person 8 im Gebäude 2 nicht verfolgbar sind. Ausserdem kann die oben genannte App von der Person 8 aktiviert und deaktiviert werden. Im Notfall, beispielsweise bei einem Feueralarm, kann die Person 8 die Bluetooth Funktion und die App aktivieren. Je nach Ausgestaltung kann die App automatisch aktiviert werden oder immer aktiv sein, wenn das mobile Gerät 10 eingeschaltet ist.

Das Smartphone als beispielhaftes mobiles Gerät 10 übermittelt Fluchtweginformationen an die Person 8. Die Fluchtweginformationen können in einer Ausführung auf dem Display 52 angezeigt werden, z. B. als Text, graphische Symbole (z. B. Pfeile), Karten und/oder Bilder von Orten). Die Fluchtweginformationen informieren bzw. instruieren die Person 8 beispielsweise wohin sie als nächstes gehen soll und/oder wie gross die Distanz zum nächsten Wegpunkt oder Ausgang ist. Wenn der Fluchtweg eine Nutzung des Aufzugsystems 1 umfasst, kann der Person 8 beispielsweise auch mitgeteilt werden, welcher Aufzug zu benutzen ist, wann er auf einem bestimmten Stockwerk ankommt und/oder wie lange die Wartezeit bis zur Ankunft einer Aufzugkabine ist. Zusätzlich oder alternativ dazu kann die Information als Audionachricht der Person 8 präsentiert werden. Der Fachmann erkennt, dass die Fluchtweginformation der Person 8 auch mittels sogenannter Smartwatches oder anderen Wearables (z. B. Brillen mit Display, evtl. in Verbindung mit Technologie, die die Funktion der erweiterten Realität (augmented reality) ermöglicht) übermittelt werden können.

Zum Verständnis der vertikalen Situation im Gebäude 2 zeigt Fig. 4 in einer Seitenansicht einen Teil des in Fig. 1 gezeigten Gebäudes 2 mit einem Ausführungsbeispiels des Aufzugsystems 1. Das Gebäude 2 hat mehrere Stockwerke L1, L2, L3, auf denen jeweils eine Vielzahl von Brandmeldern 6 und Beacons 4 angeordnet sind. Zusätzlich ist ein Beacon 4 in einer Aufzugskabine 49 angeordnet, so dass beispielsweise auch erkannt werden kann, dass sich die Person 8 momentan in der Aufzugskabine 49 aufhält und dass die Aufzugskabine 49 zu einem "sicheren" Stockwerk fährt. Dies ermöglicht, die Anzahl der Personen in der Aufzugskabine 49 zu bestimmen. Das Aufzugsystem kann diese Information nutzen, um z. B. zu ermitteln, ob und für wieviel Personen in der Aufzugkabine 49 noch Platz ist. Die Fahrtrichtung und das Zielstockwerk liegen im Aufzugsystem 1 als Information vor. Die Brandmelder 6 sind hier durch ein Netzwerk 43 eines Brandmeldesystems mit dem Gebäudemanagementsystem 42 vernetzt, in dem auch eine Brandmeldezentrale integriert sein kann. Im gezeigten Ausführungsbeispiel ist auch die Videokamera 11 an das Netzwerk 43 gekoppelt, wobei auf jedem Stockwerk L1, L2, L3 mindestens eine Videokamera 11 angeordnet sein kann. Die Stockwerke L1, L2, L3 werden durch das Aufzugsystem 1 bedient, d. h., die Person 8 kann von dem Aufzugsystem 1 von einem Einsteigestockwerk auf ein Zielstockwerk befördert werden. Die vertikale Situation des Gebäudes 2 ist ebenfalls im Gebäudeplan oder Gebäudemodell dokumentiert.

In Fig. 4 ist keine der in Fig. 1 gezeigten Fahrtreppenanlagen 18 eingezeichnet; es versteht sich jedoch, dass auch eine Fahrtreppenanlage 18 zum vertikalen Transport von Personen dient. Jede Fahrtreppenanlage 18 hat ihre eigene Steuereinrichtung, die in kommunikativer Verbindung mit dem Gebäudemanagementsystem 42 und/oder dem Sicherheitssystem 44 stehen kann. In einem Notfall ist es dadurch möglich, die Fahrtreppenanlage 18 in einen festgelegten Betriebsmodus (einschliesslich Stillstand) zu setzten. In einem Betriebsmodus kann eine Fahrtreppenanlage 18 betr. ihrer Fahrtrichtung angesteuert werden, so dass z. B. mehr Transportkapazität in Richtung des Ausgangs bzw. des Zielorts oder in der aktuell benötigten Richtung entsprechend dem Verkehrsbedarf zur Verfügung steht.

Das in Fig. 4 gezeigte Aufzugsystem 1 ist beispielsweise mit einer Zielrufsteuerung ausgestattet, wobei Zielrufe über auf den Stockwerken L1, L2, L3 installierten Terminals 54 eingegeben werden können. Die Funktion der Zielrufsteuerung ist im gezeigten Ausführungsbeispiel in einer Steuervorrichtung (Ctrl) 30 implementiert; sie kann aber auch ganz oder teilweise in einer Aufzugsteuerung 32 implementiert sein. Die Steuervorrichtung 30 und die Aufzugsteuerung 32 können zu einer Steuereinrichtung (30, 32) zusammengefasst sein. Die Aufzugsteuerung 32 ist im gezeigten Ausführungsbeispiel ausserdem mit dem Gebäudemanagementsystem 42 und dem Sicherheitssystem 44 kommunikativ verbunden. Die Aufzugsteuerung 32 steuert ausserdem eine Antriebseinheit 34, die die Aufzugkabine 49 im Schacht 38 mittels eines Tragmittels 36 verfährt.

In einem Ausführungsbeispiel kann ein Zielruf mit Hilfe eines Informationsträgers, beispielsweise in Form einer Kreditkarte oder eines Mitarbeiterausweises, eingegeben werden. Je nach Ausgestaltung befindet sich im oder auf dem Informationsträger ein von aussen kontaktierbarer Speicherchip, ein RFID Transponder in Verbindung mit einem Speicherchip oder ein von aussen optisch lesbarer Code, z. B. ein QR Code oder ein Barcode. Alternativ dazu kann die Funktionalität des Informationsträgers auch auf dem mobilen Gerät 10 realisiert sein. Auf den Displays solcher Geräte können beispielsweise QR Codes, Barcodes oder Farbmustercodes dargestellt werden. Ein zur verwendeten Technologie des Informationsträgers kompatibles Lesegerät liest vom Informationsträger beispielsweise eine Identifikationsnummer.

Die Identifikationsnummer wird in einem Ausführungsbeispiel dazu verwendet, um auf ein für den Nutzer des Informationsträgers angelegtes Profil (Datensatz) zuzugreifen, d. h. es werden Daten aus einem Datensatz gelesen. In einem solchen Profil kann zum Beispiel ein Zielstockwerk und/oder weitere personenspezifische Information (z. B. VIP Status, Art einer eventuellen körperlichen Einschränkung (eingeschränkte Sehfähigkeit, Rollstuhlfahrer)) gespeichert sein. Die Aufzugssteuerung 32 kann auf dieses Profil zugreifen und damit beispielsweise die Betriebsweise des Aufzugsystems 1 auf einen Nutzer mit einer körperlichen Einschränkung anpassen, zum Beispiel Aufzugstüren länger offen halten, damit ein Rollstuhlfahrer oder ein gehbehinderter Nutzer komfortabel einsteigen können.

In einem Ausführungsbeispiel kann auch das Sicherheitssystem 44 auf dieses Profil zugreifen und erkennen, ob die Person 8, deren mobiles Gerät 10 auf die Datenbank 47 zugreift, beispielsweise eine körperliche Einschränkung hat. Liegt eine solche Einschränkung vor, kann diese Information ebenfalls in die Ermittlung des Fluchtwegs für diese Person 8 mit einbezogen werden. So darf beispielsweise der Fluchtweg für einen Rollstuhlfahrer keine Treppen aufweisen; stattdessen soll (sofern das Aufzugsystem 1 betriebsbereit ist) eine Aufzugsfahrt eingeplant werden, wenn der Fluchtweg Stockwerkwechsel erfordert.

Die Planung kann derart sein, dass eine Aufzugskabine 49 auf das Stockwerk verfahren wird, auf dem der Fluchtweg verläuft, so dass sie bereits einsteigebereit ist, wenn die Person 8 dort ankommt. Besteht dagegen eine eingeschränkte Sehfähigkeit, wird die Fluchtweginformation an das mobile Gerät 10 zusammen mit einem Steuerbefehl übermittelt, der das mobile Gerät 10 veranlasst, die Fluchtweginformation der Person 8 hörbar mitzuteilen.

Im Vorhergehenden ist beschrieben, dass registrierte Nutzer die Möglichkeit haben, spezielle Bedürfnisse (z. B. wegen einer körperlichen Einschränkung) bereits im Voraus anzumelden, d. h. z. B. in einem Benutzerprofil zu speichern. Alternativ dazu kann Information bzgl. solcher spezieller Bedürfnisse auch nur lokal beim Nutzer, z. B. auf dem mobilen Gerät 10 der Person 8, hinterlegt werden und erst bei der tatsächlichen Benutzung übermittelt werden, z. B. an die Aufzugsteuerung 32. In einer anderen Ausgestaltung können spezielle Bedürfnisse auch ohne vorhergehende Registrierung oder Speicherung ermittelt werden, beispielsweise über Zusatzfunktionen in der App oder durch eine Analyse der Bewegung einer Person, z. B. wie sie sich bewegt oder verhält (z. B. Fortbewegungsgeschwindigkeit der Person 8 (z. B. Messen der Zeit zur Überbrückung einer bekannten Distanz zwischen zwei Beacons) oder Nutzung von Treppen).

Das Gebäudemanagementsystem 42 und das Sicherheitssystem 44 sind jeweils mikroprozessorgesteuerte Rechnersysteme, in denen aufgabenspezifische Computerprogramme ausgeführt werden. Zur Illustration ist in Fig. 2 das Sicherheitssystem 44 mit einem integrierten Rechnersystem (µP) 44a gezeigt. Das Gebäudemanagementsystem 42 übernimmt allgemein Steuerungsaufgaben der Kommunikations-, Haustechnik- und Gefahrenmeldeanlagen und vereinfacht die Bedienung und Betreuung dieser Anlagen. Es unterstützt insbesondere den Betreiber oder Verwalter eines Gebäudes bei dispositiven Sicherheitsaufgaben, beispielsweise stellt es automatisch im Alarmfall detaillierte Informationen in textlicher und/oder grafischer Form für mögliche Vorgehensweisen am Alarmort zur Verfügung. Als weitere Funktionen gibt das Gebäudemanagementsystem 42 z. B. Alarmhinweise für Interventionskräfte oder zu benachrichtigende Stellen, stellt Übersichten über die aktuelle Gefahrensituation zur Verfügung und protokolliert eingehende Meldungen und durchgeführte Aktivitäten.

Im hier beschriebenen Ausführungsbeispiel ist die Funktionalität des Evakuierens im Sicherheitssystem 44 implementiert. Dazu steht das Sicherheitssystem 44 mit dem Gebäudemanagementsystem 42 und je nach Ausgestaltung auch mit dem Aufzugsystem 1 in kommunikativer Verbindung, um im Notfall die sichere und effiziente Evakuierung des Gebäudes 2 zu steuern und zu überwachen. Es versteht sich jedoch, dass in einem anderen Ausführungsbeispiel die Funktionalität des Evakuierens auch im Gebäudemanagementsystem 42 oder Aufzugsystem 1 implementiert sein kann, und dass die genannten Funktionalitäten in einem System zusammengefasst sein können. Eine separate Darstellung des Sicherheitssystems 44 kann dann entfallen.

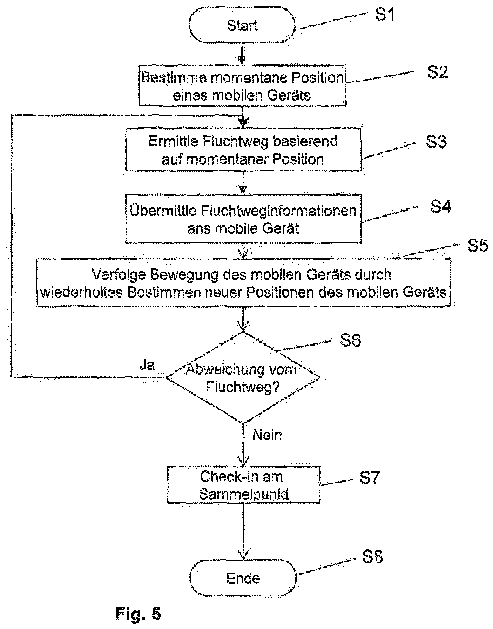

Mit dem Verständnis der in Verbindung mit den Fig. 1 - Fig. 4 beschriebenen prinzipiellen Struktur und Funktionalitäten des Gebäudes 2 und seiner Systeme (vor allem Gebäudemanagementsystem 42, Brandmeldesystem, Aufzugsystem 1), erfolgt im Folgenden eine Beschreibung von Ausführungsbeispielen eines Verfahrens zum Evakuieren des Gebäudes 2 anhand von Fig. 5. Der Fachmann erkennt, dass das gezeigte schematische Ablaufdiagramm abhängig von einem konkreten Ausführungsbeispiel mehr oder weniger Schritte umfassen kann. In Verbindung mit der Beschreibung von Fig. 5 ist angenommen, dass das mobile Gerät 10 ein Smartphone mit aktivierter App ist, das die Person 8 gemäss der in Fig. 1 beispielhaft gezeigten Situation auf einem Stockwerk des Gebäudes 2 bei sich trägt. Das Verfahren wird dabei im computergestützten Sicherheitssystem 44 ausgeführt. Das Verfahren gemäss Fig. 5 beginnt in einem Schritt S1 und endet in einem Schritt S8.

Stellt das Gebäudemanagementsystem 42 mittels der Brandmelder 6 fest, dass im Gebäude 2 ein Feuer ausgebrochen ist, leitet es eine Notfallprozedur ein, in der beispielsweise Personen mittels akustischer und optischer Alarme gewarnt werden, Brandschutztüren geschlossen werden und die Aufzugsysteme 1 und die Fahrtreppenanlagen 18 in einen Notfallmodus überführt werden. In einem solchen Notfallmodus können z. B. keine (Ziel)Rufe eingegeben werden, bzw. die Aufzugsteuerung 32 ignoriert diese. Das Gebäudemanagementsystem 42 sendet ausserdem eine Alarmmeldung an das Sicherheitssystem 44, das daraufhin die Evakuierung des Gebäudes 2 einleitet. Das Gebäudemanagementsystem 42 kann auch veranlassen, dass z. B. vom Sicherheitssystem 44 aus automatisierte Benachrichtigungen an die im Gebäude 2 befindlichen Personen 8, bzw. deren mobile Geräte 10 versendet werden, beispielsweise mit der Aufforderung, das Gebäude 2 zu verlassen. Empfängt das mobile Gerät 10 die Benachrichtigung, kann in einem Ausführungsbeispiel dadurch die Softwareanwendung (App) aktiviert werden. In entsprechender Weise können in einer Ausgestaltung auch weitere Personen informiert werden, beispielsweise solche, die momentan nicht im Gebäude 2 sind, aber evtl. unterwegs zum Gebäude 2 sind.

In einem Schritt S2 wird eine momentane Position des mobilen Geräts 10 innerhalb des Gebäudes 2 bestimmt. Die Positionsbestimmung erfolgt wie oben beschrieben dadurch, dass das mobile Gerät 10 auf die Datenbank 47 zugreift, in der die Kennung des vom mobilen Gerät 10 empfangenen Beacons 4 mit dessen Ort in einem Datensatz verknüpft ist. In der in Fig. 1 gezeigten Situation kommt es beispielsweise zu einer kommunikativen Verbindung mit dem Beacon 4 in der Lobby 20 nahe der Fahrtreppenanlage 18, so dass das mobile Gerät 10 die Kennung dieses Beacons 4 empfängt.

Der Fachmann erkennt, dass der Schritt S2 unabhängig vom Schritt S1 und vor dem Schritt S1 ausgeführt werden kann. Die Position des mobilen Geräts 10 kann z. B. ständig und ohne ausgelöste Evakuierung ermittelt und an das Sicherheitssystem 44 übermittelt werden.

In einem Schritt S3 wird ein geeigneter Fluchtweg basierend auf der in Schritt S2 bestimmten Position des mobilen Geräts 10 ermittelt. Dazu führt das Sicherheitssystem 44 ein Softwareprogramm aus, das mit Hilfe des für das Gebäude 2 erstellten Gebäudemodells und der Information aus der oben genannten Auswertung der Situationsparameter (beispielsweise der Signale der Sensoren und der Brandmelder 6), den Zugriffen auf die Datenbank 47 und/oder der Auswertung des Nutzerprofils mögliche Fluchtwege berechnet. Das Softwareprogramm prüft, ob diese Fluchtwege prinzipiell verfügbar sind und nicht eventuell blockiert oder überlastet sind und ob sie für die Person 8 wegen eventueller körperlicher Einschränkungen geeignet sind. Aus den sich daraus ergebenden möglichen Fluchtwegen wählt das Softwareprogramm den Fluchtweg aus, der die Person 8 am schnellsten und sichersten zum Zielort führt. Verfahren zum Berechnen von Fluchtwegen innerhalb von Gebäuden sind bekannt, beispielsweise aus Pu, S. und Zlatanova, S., "Evacuation Route Calculation of Inner Buildings", in "Geo-Information For Disaster Management", First International Symposium on Disaster Management, Seiten 1143-1161, Springer Verlag, 2005. Diese Veröffentlichung beschreibt unter anderem das Erstellen von 3-D Gebäudemodellen und das Berücksichtigen von Faktoren, die sich während einem Notfall ändern können, beispielsweise Schadenszustand (z. B. blockierte Wege), Stromausfall und Reduzierung der Kapazität von Fluchtwegen.

In einem Schritt S4 wird Information zum ermittelten Fluchtweg an das mobile Gerät 10 übermittelt, um damit der Person 8 zu helfen, das Gebäude 2 schnell und sicher zu verlassen. Die Information kann auf dem Display 52 für die Person 8 lesbar dargestellt werden, z. B. als Text und/oder Graphik. Zusätzlich oder alternativ dazu kann die Information als Audionachricht der Person 8 präsentiert werden.

Mit der Übermittlung der Fluchtweginformation in Schritt S4 endet das Verfahren jedoch noch nicht. Die hier beschriebene Technologie ist nämlich so ausgestaltet, dass überwacht wird, ob die Person 8 auch tatsächlich den Zielort, d. h. den Sammelpunkt 12, erreicht. In einem Ausführungsbeispiel (nicht gezeigt) schreitet das Verfahren von Schritt S4 direkt zu einem Schritt S7. Im Schritt S7 hat die Person 8 den Zielort erreicht; zwischen dem von ihr getragenen mobilen Gerät 10 und dem am Sammelpunkt 12 vorhandenen Beacon 4 kommt es zu einer kommunikativen Verbindung, die im Sicherheitssystem 44 registriert wird. Die Person 8 gilt dadurch als "evakuiert".

Im in Fig. 5 gezeigten Ausführungsbeispiel wird nach Schritt S4 weiterhin jede kommunikative Verbindung des mobilen Geräts 10 mit einem Beacon 4 detektiert. Bewegt sich die Person 8 von der in Schritt S2 bestimmten Position weg, kommt es zu einer neuen kommunikativen Verbindung mit einem anderen Beacon 4 und die neue Position des mobilen Geräts 10 im Gebäude 2 wird bestimmt. In einem Schritt S5 wird somit die Bewegung des mobilen Geräts 10 durch Bestimmen neuer Positionen des mobilen Geräts 10 verfolgt, beispielsweise bis die Person 8 am Zielort als "evakuiert" registriert ist.

In einem Ausführungsbeispiel (nicht gezeigt) schreitet das Verfahren direkt von Schritt S5 zu Schritt S7.

Die hier beschriebene Technologie erlaubt durch die Verfolgung der Bewegung des mobilen Geräts 10, Abweichungen vom Fluchtweg zu erkennen. Ein entsprechendes Ausführungsbeispiel zeigt Fig. 5: In einem Schritt S6 wird überprüft, ob eine neu bestimmte Position des mobilen Geräts 10 von dem in Schritt S3 ermittelten Fluchtweg abweicht. Liegt keine Abweichung vor, schreitet das Verfahren entlang dem Nein-Zweig zum Schritt S7. Im Schritt S7 hat die Person 8 den Zielort, d.h. den Sammelpunkt 12, erreicht; zwischen dem von ihr getragenen mobilen Gerät 10 und dem am Sammelpunkt 12 vorhandenen Beacon 4 kommt es zu einer kommunikativen Verbindung, die im Sicherheitssystem 44 registriert wird. Die Person 8 gilt dadurch als "evakuiert".

Liegt im Schritt S6 eine Abweichung vor, schreitet das Verfahren entlang dem Ja-Zweig zurück zu Schritt S3. Zu einer Abweichung kann es kommen, wenn sich die Person 8 verläuft, beispielsweise wegen schlechter Sicht und/oder Panik, oder wenn die Person 8 einen anderen Weg einschlagen muss, weil der vorgesehene Fluchtweg inzwischen blockiert oder überlastet ist.

Im Schritt S3 wird basierend auf der im Schritt S5 bestimmten Position ein neuer Fluchtweg ermittelt. Die Ermittlung des neuen Fluchtwegs erfolgt wie oben in Verbindung mit Schritt S3 beschrieben. Daran anschliessend werden in Schritt S4 die neuen Fluchtweginformationen an das mobile Gerät 10 übermittelt, wie oben beschrieben. Folgt die Person 8 dem neuen Fluchtweg, erreicht sie den Sammelpunkt 12 und wird dort registriert, wie in Verbindung mit Schritt S7 beschrieben.

Die neuen Fluchtweginformationen können die Person 8 beispielsweise auffordern, umzukehren, um so wieder auf den ursprünglich ermittelten Fluchtweg zurückzukehren. Dies kann z. B. der Fall sein, wenn schnell erkannt wird, dass eine Abweichung vorliegt, und die Person 8 erst geringfügig vom Fluchtweg abgekommen ist. Der neu ermittelte Fluchtweg umfasst daher den Rückweg (d. h. den Weg zurück zum ursprünglichen Fluchtweg) und den ursprünglichen Fluchtweg (bzw. den verbleibenden Teil des ursprünglichen Fluchtweges). Ist die Person 8 dagegen bereits weiter vom Fluchtweg abgekommen, kann ausgehend vom momentanen Standort ein Fluchtweg bestimmt werden, der keine oder nur eine teilweise Übereinstimmung mit dem ursprünglichen Fluchtweg hat. Aus Sicht der Person 8 handelt es sich dabei immer um die aktuelle Fluchtweginformation, unabhängig davon, ob und wie der ursprüngliche Fluchtweg aktualisiert werden musste.

Sollte eine Aktualisierung des Fluchtwegs erfolgen, kann die Person 8 beispielsweise durch einen Warnhinweis darauf hingewiesen werden, um sicherzustellen, dass die Person 8 den Warnhinweis auch zur Kenntnis nimmt. Dazu kann eine entsprechende Nachricht an das mobile Gerät 10 gesendet werden. Das mobile Gerät 10 erzeugt daraufhin ein hörbares Signal oder Mitteilung, eine lesbare Mitteilung und/oder ein Vibrieren des mobilen Geräts 10.

## Patentansprüche

1. Verfahren zum Steuern eines Sicherheitssystems (44) zur Führung einer Person (8) während einer Evakuierungssituation in einem mit einem Aufzugsystem (1) ausgestatteten Gebiet (2), in dem eine Vielzahl von Festpunktmarkierungen (4) an festgelegten Standorten angeordnet ist, wobei die Festpunktmarkierungen (4) Daten speichern, die von einem von der Person (8) mitgeführten mobilen Gerät (10) empfangbar sind, umfassend:
Bestimmen einer momentanen Position des mobilen Geräts (10) im Gebiet (2), wenn das mobile Gerät (10) mittels von einer ersten Festpunktmarkierung (4) empfangener Kennung auf eine Datenbank (47) des Sicherheitssystems (44) oder eines Gebäudemanagementsystems (42) zugreift, in der die Kennung mit einem Standort der ersten Festpunktmarkierung (4) verknüpft sind;
Ermitteln eines Fluchtwegs in dem Gebiet (2) zu einem Zielort (12) basierend auf der momentanen Position des mobilen Geräts (10);
Übermitteln von Fluchtweginformation an das mobile Gerät (10); und
Registrieren der Person (8) beim Erreichen des Zielorts (12), wenn das mobile Gerät (10) am Zielort (12) mittels einer zweiten Festpunktmarkierung (4) erkannt wird, wobei das Erkennen am Zielort dadurch erfolgt, dass es zwischen dem mobilen Gerät (10) und der zweiten Festpunktmarkierung (4) zu einer kommunikativen Verbindung kommt, die im Sicherheitssystem (44) registriert wird.

2. Verfahren nach Anspruch 1, ausserdem umfassend Bestimmen neuer Positionen des mobilen Geräts (10), um eine Ortsveränderung des mobilen Geräts (10) zu verfolgen.

3. Verfahren nach Anspruch 2, ausserdem umfassend Ermitteln, ob eine neu bestimmte Position vom Fluchtweg abweicht.

4. Verfahren nach Anspruch 2 oder 3, ausserdem umfassend Ermitteln eines neuen Fluchtweges basierend auf der neu bestimmten Position und Übermitteln von neuer Fluchtweginformation an das mobile Gerät (10).

5. Verfahren nach Anspruch 4, ausserdem umfassend Senden eines Warnhinweises an das mobile Gerät (10), wenn neue Fluchtweginformation vorliegt.

6. Verfahren nach einem der vorhergehenden Ansprüche, bei dem die Festpunktmarkierungen (4) mit Bluetooth Technologie ausgestattet sind.

7. Verfahren nach einem der vorhergehenden Ansprüche, ausserdem aufweisend Ermitteln, ob die Person (8) eine körperliche Einschränkung hat.

8. Verfahren nach Anspruch 7, bei dem, wenn die Person (8) eine körperliche Einschränkung hat, die Ermittlung des Fluchtwegs ausserdem auf dieser körperlichen Einschränkung basiert.

9. Verfahren nach Anspruch 8, bei dem der ermittelte Fluchtweg eine Nutzung des Aufzugsystems (1) umfasst, wenn die Person (8) eine eingeschränkte Gehfähigkeit hat.

10. Verfahren nach einem der Ansprüche 7-9, bei dem das Ermitteln, ob eine Person (8) eine körperliche Einschränkung hat, mittels eines Zugreifens auf ein Benutzerprofil, in dem eine körperliche Einschränkung registriert ist, oder mittels einer Analyse der Bewegung der Person (8) erfolgt.

11. Verfahren nach einem der Ansprüche 7-10, bei dem das Übermitteln von Fluchtweginformation an das mobile Gerät (10) mit einem Steuerbefehl erfolgt, wenn die körperliche Einschränkung eine eingeschränkte Sehfähigkeit ist, um die Fluchtweginformation der Person (8) hörbar mitzuteilen.

12. Verfahren nach einem der vorhergehenden Ansprüche, ausserdem aufweisend Ansteuern des Aufzugsystems (1) in Abhängigkeit des ermittelten Fluchtwegs, um eine Aufzugskabine (49) auf ein Stockwerk zu verfahren, auf dem der ermittelte Fluchtweg verläuft.

13. Verfahren nach einem der vorhergehenden Ansprüche, bei dem die Ermittlung des Fluchtwegs ausserdem auf einem aktuellen Situationsparameter basiert, wobei ein Situationsparameter mittels eines im Gebiet (2) vorhandenen Systems von Sensoren (6, 11) bestimmt wird.

14. System zur Führung einer Person (8) während einer Evakuierungssituation in einem mit einem Aufzugsystem (1) ausgestatteten Gebiet (2), umfassend:
eine Vielzahl von Festpunktmarkierungen (4) an festgelegten Standorten, wobei eine Festpunktmarkierung (4) eine Kennung speichert, die von einem von der Person (8) mitgeführten mobilen Gerät (10) empfangbar ist; und
einem Sicherheitssystem (44) mit einem Rechnersystem (44a), wobei das Rechnersystem (44a) so konfiguriert ist, um ein Softwareprogramm auszuführen,
das derart konfiguriert ist:
eine momentane Position des mobilen Geräts (10) im Gebiet (2) zu bestimmen, wenn das mobile Gerät (10) mittels von einer ersten Festpunktmarkierung (4) empfangenen Kennung auf eine Datenbank (47) des Sicherheitssystems (44) oder eines Gebäudemanagementsystems (42) zugreift, in der die Kennung mit einem Standort der ersten Festpunktmarkierung (4) verknüpft ist;
einen Fluchtweg in dem Gebiet (2) zu einem Zielort (12) zu ermitteln, wobei die Ermittlung auf der momentanen Position des mobilen Geräts (10) basiert;
das Fluchtweginformation an das mobile Gerät (10) zu übermitteln; und die Person (8) beim Erreichen des Zielorts (12) zu registrieren, wenn das mobile Gerät (10) am Zielort (12) mittels einer zweiten Festpunktmarkierung (4) erkannt wird.

15. System nach Anspruch 14, bei dem die Festpunktmarkierungen (4) mit Bluetooth Technologie ausgestattet sind und konfiguriert sind, eine Kennung auszusenden, die das mobile Gerät (10) empfängt, wenn es in Funkreichweite ist.

16. System nach einem der Ansprüche 14-15, bei dem eine Festpunktmarkierung (4) in einer Aufzugkabine (49) des Aufzugsystems (1) angeordnet ist.

17. System nach einem der Ansprüche 14-16, ausserdem aufweisend ein System von Sensoren (6, 11) im Gebiet (2), mit dem Situationsparameter bestimmbar sind, wobei ein Situationsparameter zur Ermittlung des Fluchtwegs verwendbar ist.

## Claims

1. Method for controlling a safety system (44) for guiding a person (8) during an evacuation situation in an area (2) equipped with an elevator system (1), in which area a plurality of fixed point markers (4) are arranged at fixed locations, wherein the fixed point markers (4) store data that can be received by a mobile device (10) carried by the person (8), comprising:
determining an instantaneous position of the mobile device (10) in the area (2) when the mobile device (10), by means of an identifier received from a first fixed point marker (4), accesses a database (47) of the safety system (44) or of a building management system (42) in which the identifier is linked to a location of the first fixed point marker (4);
ascertaining an escape route in the area (2) to a destination (12) on the basis of the instantaneous position of the mobile device (10);
transmitting escape route information to the mobile device (10); and
registering the person (8) upon reaching the destination (12) when the mobile device (10) is detected at the destination (12) by means of a second fixed point marker (4), wherein detection at the destination is carried out by a communication link being established between the mobile device (10) and the second fixed point marker (4), which connection is registered in the safety system (44).

2. Method according to claim 1, further comprising determining new positions of the mobile device (10) to track a change in location of the mobile device (10).

3. Method according to claim 2, further comprising ascertaining whether a newly determined position deviates from the escape route.

4. Method according to claim 2 or claim 3, further comprising ascertaining a new escape route on the basis of the newly determined position and transmitting new escape route information to the mobile device (10).

5. Method according to claim 4, further comprising sending a warning notice to the mobile device (10) when there is new escape route information.

6. Method according to any of the preceding claims, wherein the fixed point markers (4) are equipped with Bluetooth technology.

7. Method according to any of the preceding claims, further comprising ascertaining whether the person (8) has a physical disability.

8. Method according to claim 7, wherein, if the person (8) has a physical disability, the escape route is also ascertained on the basis of this physical disability.

9. Method according to claim 8, wherein the ascertained escape route comprises use of the elevator system (1) when the person (8) has limited mobility.

10. Method according to any of claims 7-9, wherein it is ascertained whether a person (8) has a physical disability by accessing a user profile in which a physical disability has been registered or by analyzing the movement of the person (8).

11. Method according to any of claims 7-10, wherein escape route information is transmitted to the mobile device (10) with a control command to communicate the escape route information to the person (8) audibly if the physical disability is impaired vision.

12. Method according to any of the preceding claims, further comprising controlling the elevator system (1) in accordance with the ascertained escape route in order to transport an elevator car (49) to a floor on which the ascertained escape route proceeds.

13. Method according to any of the preceding claims, in which the escape route is also ascertained on the basis of a current situation parameter, wherein a situation parameter is determined by means of a system of sensors (6, 11) present in the area (2).

14. System for guiding a person (8) during an evacuation situation in an area (2) equipped with an elevator system (1), comprising:
a plurality of fixed point markers (4) at fixed locations, wherein the fixed point markers (4) store an identifier that can be received by a mobile device (10) carried by the person (8); and
a safety system (44) with a computer system (44a), wherein the computer system (44a) is configured to execute a software program that is configured:
to determine an instantaneous position of the mobile device (10) in the area (2) when the mobile device (10), by means of an identifier received from a first fixed point marker (4), accesses a database (47) of the safety system (44) or of a building management system (42) in which the identifier is linked to a location of the first fixed point marker (4);
ascertaining an escape route in the area (2) to a destination (12), wherein said route is ascertained on the basis of the instantaneous position of the mobile device (10);
to transmit the escape route information to the mobile device (10); and
to register the person (8) upon reaching the destination (12) when the mobile device (10) is detected at the destination (12) by means of a second fixed point marker (4).

15. System according to claim 14, wherein the fixed point markers (4) are equipped with Bluetooth technology and are configured to emit an identifier that the mobile device (10) receives when in radio range.

16. System according to any of claims 14-15, wherein a fixed point marker (4) is arranged in an elevator car (49) of the elevator system (1).

17. System according to any of claims 14-16, further comprising a system of sensors (6, 11) in the area (2) by means of which situation parameters can be determined, wherein a situation parameter can be used to ascertain the escape route.

## Revendications

1. Procédé de commande d'un système de sécurité (44) destiné à guider une personne (8) lors d'une situation d'évacuation dans une zone (2) équipée d'un système d'ascenseur (1) dans laquelle une pluralité de marqueurs à points fixes (4) sont disposés en des emplacements fixes, dans lequel les marqueurs à points fixes (4) mémorisent des données pouvant être reçues par un appareil mobile (10) porté par la personne (8), comportant :
la détermination d'une position actuelle de l'appareil mobile (10) dans la zone (2) lorsque l'appareil mobile (10) accède à une base de données (47) du système de sécurité (44) ou d'un système de gestion de bâtiment (42) grâce àun identifiant reçu d'un premier marqueur à point fixe (4), dans laquelle l'identifiant est associé à un emplacement du premier marqueur à point fixe (4) ;
la détermination d'une issue de secours dans la zone (2) menant à une destination (12) sur la base de la position actuelle de l'appareil mobile (10) ;
la transmission d'informations sur l'issue de secours à l'appareil mobile (10) ; et l'enregistrement de la personne (8) lorsqu'elle atteint la destination (12), lorsque l'appareil mobile (10) est détecté à la destination (12) grâce à un deuxième marqueur à point fixe (4), dans lequel la détection à la destination est effectuée en établissant une connexion de communication entre l'appareil mobile (10) et le deuxième marqueur à point fixe (4) qui est enregistré dans le système de sécurité (44).

2. Procédé selon la revendication 1, comprenant en outre la détermination de nouvelles positions de l'appareil mobile (10) pour suivre un changement de position de l'appareil mobile (10).

3. Procédé selon la revendication 2, consistant en outre à déterminer si une position nouvellement déterminée s'éloigne de l'issue de secours.

4. Procédé selon la revendication 2 ou 3, comprenant en outre la détermination d'une nouvelle issue de secours sur la base de la position nouvellement déterminée et la transmission de nouvelles informations sur l'issue de secours à l'appareil mobile (10).

5. Procédé selon la revendication 4, comprenant en outre l'envoi d'une alerte à l'appareil mobile (10) lorsque de nouvelles informations sur l'issue de secours sont disponibles.

6. Procédé selon l'une des revendications précédentes, dans lequel les marqueurs à points fixes (4) sont dotés de la technologie Bluetooth.

7. Procédé selon l'une des revendications précédentes, consistant en outre à déterminer si la personne (8) présente un handicap physique.

8. Procédé selon la revendication 7 dans lequel, si la personne (8) présente un handicap physique, la détermination de l'issue de secours est également basée sur ce handicap physique.

9. Procédé selon la revendication 8, dans lequel l'issue de secours déterminée comprend l'utilisation du système d'ascenseur (1) s'il s'agit d'une personne (8) à mobilité réduite.

10. Procédé selon l'une des revendications 7 à 9, dans lequel on détermine si une personne (8) présente un handicap physique en accédant à un profil d'utilisateur dans lequel un handicap physique est enregistrée ou en analysant le déplacement de la personne (8).

11. Procédé selon l'une des revendications 7 à 10, dans lequel la transmission d'informations sur l'issue à l'appareil mobile (10) est effectuée grâce à un ordre de commande lorsque le handicap physique constitue une déficience visuelle afin de communiquer de manière audible les informations sur l'issue de secours à la personne (8).

12. Procédé selon l'une des revendications précédentes, comprenant en outre la commande du système d'ascenseur (1) en fonction de l'issue de secours déterminée afin de déplacer une cabine d'ascenseur (49) vers un étage qui donne accès à ladite issue de secours.

13. Procédé selon l'une des revendications précédentes, dans lequel la détermination de l'issue de secours est également basée sur un paramètre de situation actuelle, dans lequel un paramètre de situation est déterminé grâce à un système de capteurs (6, 11) présents dans la zone (2).

14. Système de guidage d'une personne (8) lors d'une situation d'évacuation dans une zone (2) équipée d'un système d'ascenseur (1), comprenant :
une pluralité de marqueurs à points fixes (4) en des emplacements prédéterminés, dans lequel un marqueur à point fixe (4) enregistre un identifiant pouvant être reçu d'un appareil mobile (10) porté par la personne (8) ; et
un système de sécurité (44) comprenant un système informatique (44a), dans lequel le système informatique (44a) est configuré pour exécuter un logiciel configuré de manière à :
déterminer une position actuelle de l'appareil mobile (10) dans la zone (2) lorsque l'appareil mobile (10) accède à une base de données (47) du système de sécurité (44) ou d'un système de gestion de bâtiment (42) grâce à un identifiant reçu d'un premier marqueur à point fixe (4), dans laquelle l'identifiant est associé à un emplacement du premier marqueur à point fixe (4) ;
déterminer une issue de secours dans la zone (2) menant vers une destination (12), dans lequel la détermination est basée sur la position actuelle de l'appareil mobile (10) ;
transmettre les informations sur l'issue de secours à l'appareil mobile (10) ; et enregistrer la personne (8) lorsqu'elle atteint la destination (12), lorsque l'appareil mobile (10) est détecté à la destination (12) grâce àun deuxième marqueur à point fixe (4).

15. Système selon la revendication 14, dans lequel les marqueurs à points fixes (4) sont dotés de la technologie Bluetooth et sont configurés pour transmettre un identifiant que l'appareil mobile (10) reçoit lorsqu'il est à portée radio.

16. Système selon l'une des revendications 14 à 15, dans lequel un marquage à point fixe (4) est disposé dans une cabine d'ascenseur (49) du système d'ascenseur (1).

17. Système selon l'une des revendications 14 à 16, comprenant en outre un système de capteurs (6, 11) dans la zone (2) grâce auxquels des paramètres de situation peuvent être déterminés, dans lequel un paramètre de situation peut être utilisé pour déterminer l'issue de secours.
